## Europäisches Patentamt

(19) ## European Patent Office

(11) Veröffentlichungsnummer: **0 177 877**

**Office européen des brevets**

**B1**

(12) # EUROPÄISCHE PATENTSCHRIFT

(45) Veröffentlichungstag der Patentschrift:
12.07.89

(51) Int. Cl.⁴: **B 25 B 1/10**

(21) Anmeldenummer: **85112400.8**

(22) Anmeldetag: **01.10.85**

(54) **Hochdruckspanner.**

(30) Priorität: **12.10.84 DE 3437403**

(43) Veröffentlichungstag der Anmeldung:
**16.04.86 Patentblatt 86/16**

(45) Bekanntmachung des Hinweises auf die Patenterteilung:
**12.07.89 Patentblatt 89/28**

(84) Benannte Vertragsstaaten:
**CH DE FR IT LI SE**

(56) Entgegenhaltungen:
**DE-B-1 220 800**
**DE-B-1 278 965**
**DE-B-1 289 799**
**DE-C-1 141 600**
**DE-C-2 308 175**
**DE-U-1 789 989**
**GB-A-1 080 179**
**US-A-2 402 411**

(73) Patentinhaber: **Saurer- Allma GmbH,**
**Leonhardstrasse 19, D-8960 Kempten (DE)**

(72) Erfinder: **Krause, Ludwig, Dipl.- Ing. FH, Erlenweg**
**7 a, D-8963 Waltenhofen 1 (DE)**

(74) Vertreter: **Pfister, Helmut, Dipl.- Ing., Buxacher**
**Strasse 9, D-8940 Memmingen/Bayern (DE)**

**Beschreibung**

Die Erfindung betrifft einen Hochdruckspanner mit einem Schraubstockkörper, einer Festbacke und einer relativ zur Festbacke in einer Führung des Schraubstockkörpers beweglichen Backe, einem Widerlager am Schraubstockkörper für einen Spannantrieb der beweglichen Backe, der aus einem Kraftverstärker und einer Schraubspindel besteht, die mittels einer gemeinsamen Kurbel antreibbar sind, wobei die Schraubspindel in eine Spindelmutter eingreift und der Spannantrieb mit der Spindelmutter unterhalb der Backen angeordnet sind.

Ein Hochdruckspanner der vorstehend angegebenen Gattung ist durch GB-A-1 080 179 bekannt geworden. Bei diesem Hochdruckspanner ist die Festbacke einstückig mit dem Schraubstockkörper ausgebildet und an dem Ende des Schraubstockkörpers angeordnet, das der beweglichen Backe zugewandt ist. Der Spannantrieb bewegt sich beim Spannvorgang zusammen mit der beweglichen Backe und greift mit einer Spindel und einer Führung in eine Ausnehmung im Schraubstockkörper unter der Festbacke ein.

Bei dieser Bauweise ergibt sich eine vergleichweise große Baulänge des Hochdruckspanners, da sich die Abmessungen des Schraubstockkörpers, der beweglichen Backe und teilweise auch des Spannantriebs zu den Abmessungen des eingespannten Werkstücks addieren.

Der notwendige Platzbedarf kann nur unwesentlich verringert werden, beispielsweise dadurch, daß die Kurbel abnehmbar ausgebildet wird.

Es ist Aufgabe der Erfindung, einen Hochdruckspanner der eingangs angegebenen Gattung dahingehend weiter zu entwickeln, daß unter Beibehaltung der vollen Anwendbarkeit einer Bauweise mit Kraftverstärker das Verhältnis der Spannweite zur Gesamtbaulänge wesentlich verbessert wird.

Zur Lösung dieser Aufgabe wird vorgeschlagen, daß die Festbacke an dem einen Ende des Schraubstockkörpers und das Widerlager an dem anderen Ende des Schraubstockkörpers angeordnet ist, der in seiner Führung einen Schlitten für die bewegliche Backe aufnimmt, wobei der Schlitten relativ zum Spannantrieb verschiebbar ist und sich die bewegliche Backe in der zurückgezogenen Stellung des Schlittens über dem Kraftverstärker befindet, der im Schraubstockkörper zwischen dem Widerlager und der Schraubspindel angeordnet ist, und daß die Spindelmutter sich in einem gegen die Festbacke gerichteten und über die bewegliche Backe vorstehenden Ansatz des Schlittens befindet.

Durch die erfindungsgemäße Anordnung wird die Baulänge wesentlich verkürzt. Insbesondere addiert sich die Baulänge des Schraubstockkörpers nicht mehr zur Gesamtbaulänge. Die Anordnung eines Schlittens in der angegebenen Art bringt für die bewegliche Backe eine sehr präzise Führung, wobei insbesondere die Krafteinleitung in die bewegliche Backe bewirkt, daß sich die auf die bewegliche Backe bzw. den Schlitten einwirkenden Kippmomente verringern.

Die Erfindung schlägt ferner vor, daß der Schlitten mit seinem wesentlichen Teil in eine längliche Ausnehmung des Schraubstockkörpers eingelassen ist und daß in dieser Ausnehmung die Führung des Schlittens am Schraubstockkörper angeordnet ist. Diese Bauweise hat den Vorteil, daß die Schraubspindel und die Führung nur einen geringen räumlichen Abstand aufweisen, was sicherstellt, daß die von der Schraubspindel aufgebrachten Kippkräfte ebenfalls gering bleiben. Insbesondere wird hierdurch aber eine sehr stabile Bauweise des Schraubstockkörpers erhalten. Die Erfindung schlägt ferner vor, daß der Schlitten nur mit der aufmontierten beweglichen Backe über den Schraubstockkörper nach oben vorsteht. Dadurch können leicht verschiedene Backen Verwendung finden, wodurch sich sowohl die Spannweite, als auch die Anwendungsmöglichkeiten des Hochdrauckspanners gemäß der Erfindung beträchtlich erweitern.

Vorzugsweise weist der Schlitten eine Längsbohrung auf, in die die Spindelmutter eingearbeitet ist und die auch den Kraftverstärker umschließt. Dabei ist darauf hinzuweisen, daß die Spindelmutter integrierter Bestandteil des Schlittens sein kann, oder auch als eingesetztes Bauteil ausgebildet sein kann. Die gewählte Anordnung sichert die Spindel und den Kraftverstärker vor äußeren Einflüssen.

Da die Längsbohrung verhältnismäßig zentral angeordnet ist, verringert sich hierdurch das Widerstandsmoment und auch das Trägheitsmoment nur sehr wenig.

Insbesondere schlägt die Erfindung vor, daß sich der Kraftverstärker bei der Drehung der Schraubspindel mit dieser mitdreht, wobei vorzugsweise zwischen der Schraubspindel und dem Kraftverstärker eine federbelastete Ausrückkupplung vorgesehen ist und beim Auskuppeln der Kraftverstärker unter der Wirkung der Kurbel die Schraubspindel mit erhöter Kraft voranschiebt.

In der Zeichnung ist ein Ausführungsbeispiel der Erfindung schematisch dargestellt. Es zeigen:

Fig. 1    eine Seitenansicht mit teilweisem Längsschnitt durch einen Hochdruckspanner gemäß der Erfindung,

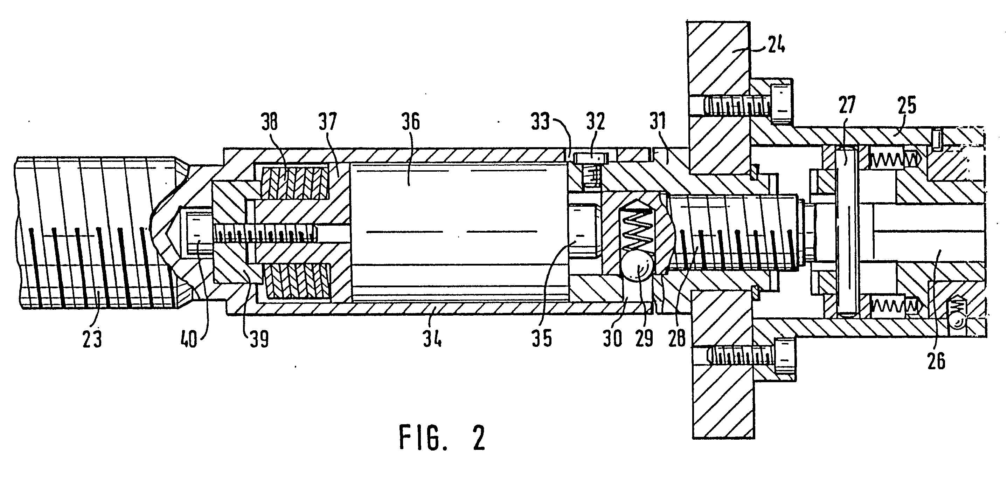

Fig. 2    einen horizontalen Schnitt entsprechend der Schnittlinie II - II der Fig. 1, wobei der Schlitten und der Schraubstockkörper weggelassen sind, in einem anderen Maßstab, und

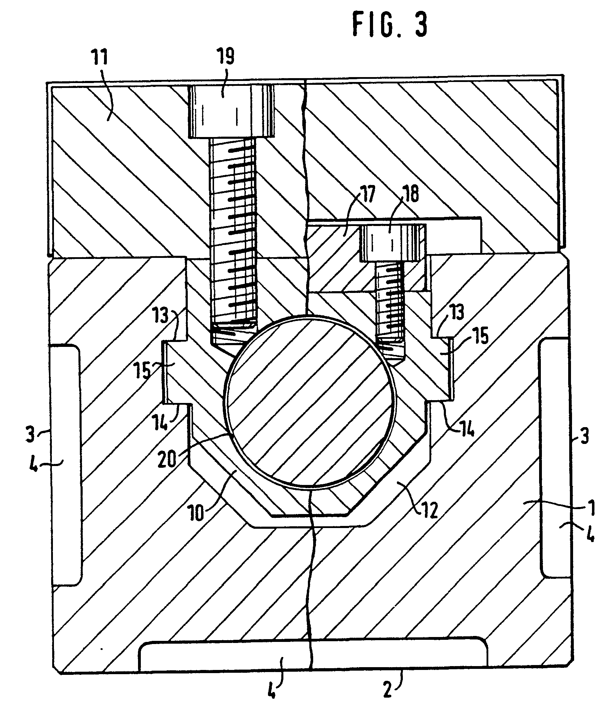

Fig. 3    einen Schnitt entsprechend der Schnittlinie III - III der Fig. 1, im Maßstab der Fig. 2.

Der Schraubstockkörper 1 besitzt im wesentlichen eine quaderförmige Gestalt. An der Auflagefläche 2 und an den Seitenflächen 3 sind Ausnehmungen 4 vorgesehen, die die Anordnung von Befestigungsmitteln zum Befestigen des Hochdruckspanners auf dem Arbeitstisch einer Werkzeugmaschine erlauben.

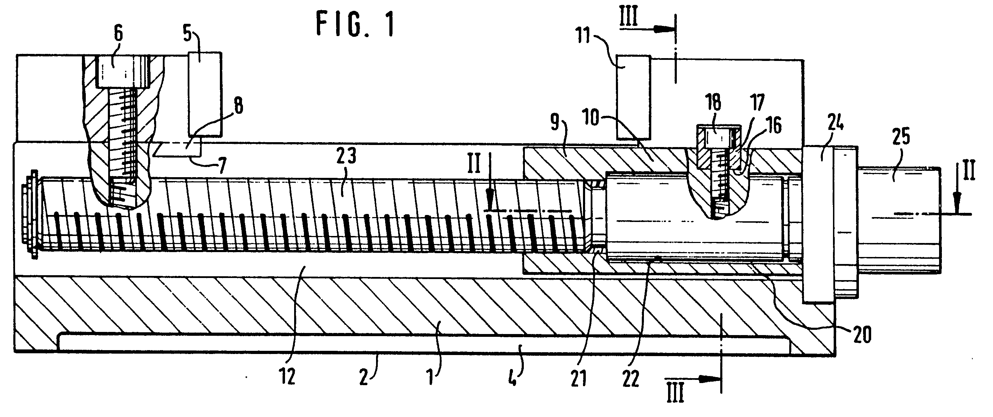

An dem einen Ende des Schraubstockkörpers 1, und zwar an dem in der Fig. 1 linken Ende, ist auf den Schraubstockkörper 1 die Festbacke 5 aufmontiert und mittels mehrerer Schrauben 6 gehalten. Die Festbacke 5 greift in die entsprechend geformte Nut 7 ein, um die Spannkräfte aufnehmen zu können. Dabei erstreckt sich der keilartig gestaltete Ansatz 8 der Festbacke 5 nur über die Randbereiche, während der mittlere Bereich frei bleibt, um Raum für den Ansatz 9 des Schlittens 10 zu lassen. Der Schlitten 10 befindet sich mit allen seinen Teilen, mit Ausnahme der beweglichen Backe 11 unterhalb der Oberkante des Schraubstockkörper 1 in einer länglichen Ausnehmung 12 des Schraubstockkörpers 1. In den Flanken dieser Ausnehmung 12 sind Führungen 13 und 14 eingearbeitet, in die der Schlitten 10 mit je einer Randleiste 15 eingreift.

Der Schlitten trägt in einer querverlaufenden Ausnehmung 16 die Feder 17, die mittels zweier Schrauben 18 gehalten ist. Diese Feder 17 dient als Abstützelement für die bewegliche Backe 11, die ihrerseits mittels der Schrauben 19 am Schlitten gehalten ist.

Der Schlitten 10 besitzt eine Längsbohrung 20, die im Bereich des Ansatzes 9 des Schlittens ein Innengewinde aufweist, das als Spindelmutter dient. Der übrige Teil 22 der Längsbohrung besitzt einen etwas größeren Durchmesser und nimmt in der ganz zurückgezogenen Stellung der Festbacke den Kraftverstärker mit den zugehörigen Einrichtungen auf. In der vorgeschobenen Stellung der Festbacke umschließt der Teil 22 einen mehr oder weniger großen Teil der Schraubspindel 23.

An dem der Festbacke 5 gegenüberliegenden Ende des Schraubstockkörpers ist das Widerlager 24 befestigt, an dem sich die Schraubspindel und der Kraftverstärker abstützen.

Am Widerlager 24 ist eine Hülse 25 gehalten, die eine Einrichtung zur Einstellung und Begrenzung des Spanndrucks umschließt, deren Einzelheiten in diesem Zusammenhang nicht näher interessieren. Mittels einer in die Öffnung 26 eingesteckten nicht gezeigten Kurbel, läßt sich über den Querbolzen 27 der Schraubbolzen 28 drehen.

Mittels der federnden Kugel 29, die in die Bohrung 30 einrastet, dreht sich bei mäßigem Widerstand an der Schraubspinel 23 die Zwischenhülse 31 mit, die wiederum über die Mitnahmeschraube 32, die in einem Langloch 33 beweglich ist, die Verbindungshülse 34 mitnimmt. Die Verbindungshülse 34 ist einstückig mit der Schraubspindel 23 ausgebildet und es ist klar, daß mittels der Kurbel in der Öffnung 26 auf diese Weise die Schraubspindel angetrieben werden kann, die sich über die Zwischenhülse 31 am Widerlager 24 abstützt.

Da die Schraubspindel über den Schlitten die bewegliche Backe bewegt, wird sich bei einem zwischen den Backen liegenden Werkstück der Vorschubwiderstand der Schraubspindel 23 dann steigern, wenn die Backen am Werkstück anließen und die Kugel 29 wird dann aus der Bohrung 30 ausrasten. Es kommt zu einer Drehbewegung zwischen dem Schraubbolzen 28 und der Zwischenhülse 31 und es wird der Druckbolzen 35 in den nur schematisch angedeuteten Kraftverstärker 36 eingedrückt. Einem vergleichsweise großen Weg des Druckbolzens 35 entspricht dabei ein geringer Weg des Druckelementes 37 das dann mit entsprechend hoher Kraft über das Tellerfederpaket 38 auf das Druckstück 39 drückt, das sich an der Schraubspindel 23 abstützt. Die Schraube 40 hält dabei das Druckstück 39 gegen das Tellerfederpaket 38.

Der hohe Druck, der im Kraftverstärker entsteht, übt somit auf die Schraubspindel 23 eine Schiebebewegung aus, die von der Schraubspindel 23 über die Spindelmutter 21 auf den Ansatz 9 des Schlittens 10 übertragen wird.

Da sich dieser Ansatz 9 auf der, der Festbacke zugewandten Seite der beweglichen Backe 11 befindet, ergibt sich eine Zugkraft, die verhindert oder wenigstens vermindert, daß sich die bewegliche Backe 11 beim Auftreten des Spanndrucks verkantet.

Wenn im Bereich des Ansatzes 9 federnde Elemente vorgesehen sind, die den Ansatz 9 gegenüber dem Schraubstockkörper nach oben drücken, werden die Randleisten 15 der Führung jeweils an den oberen Führungen 13 anliegen, wodurch Verkantungsbewegungen der vorerwähnten Art ausgeschlossen werden. Derartige elastische Elemente sind in der Zeichnung nicht gezeigt.

## Patentansprüche

1. Hochdruckspanner mit einem Schraubstockkörper (1), einer Festbacke (5) und einer relativ zur Festbacke in einer Führung (13, 14) des Schraubstockkörpers (1) beweglichen Backe (11), einem Widerlager (24) am Schraubstockkörper für einen Spannantrieb der beweglichen Backe (11), der aus einem Kraftverstärker (36) und einer Schraubspindel (23) besteht, die mittels einer gemeinsamen Kurbel antreibbar sind, wobei die Schraubspindel in eine Spindelmutter (21) eingreift und der Spannantrieb (23, 36) mit der Spindelmutter (21) unterhalb der Backen (5, 11) angeordnet sind, dadurch gekennzeichnet, daß die Festbacke (5) an dem einen Ende des Schraubstockkörpers (1) und das Widerlager (24) an dem anderen Ende des Schraubstockkörpers angeordnet ist, der in seiner Führung (13, 14) einen Schlitten (10) für die bewegliche Backe (11) aufnimmt, wobei der Schlitten (10) relativ zum Spannantrieb (23, 36) verschiebbar ist und sich die bewegliche Backe in der zurückgezogenen Stellung des Schlittens (10) über dem Kraftverstärker (36) befindet, der im Schraubstockkörper (1) zwischen dem Widerlager (24) und der Schraubspindel (23) angeordnet ist, und daß die Spindelmutter (21) sich in einem gegen die Festbacke (5) gerichteten und über die bewegliche Backe (11) vorstehenden Ansatz (9) des Schlittens (10) befindet.

2. Hochdruckspanner nach Anspruch 1, dadurch gekennzeichnet, daß der Schlitten (10) mit seinem wesentlichen Teil in eine längliche Ausnehmung (12) des Schraubstockkörpers eingelassen ist, und daß in dieser Ausnehmung die Führung (13, 14, 15) des Schlittens am Schraubstockkörper (1) angeordnet ist.

3. Hochdruckspanner nach einem oder beiden der vorhergehenden Ansprüche, dadurch gekennzeichnet, daß der Schlitten (10) nur mit der aufmontierten beweglichen Backe (11) über den Schraubstockkörper (1) nach oben vorsteht.

4. Hochdruckspanner nach einem oder mehreren der vorhergehenden Ansprüche, dadurch gekennzeichnet, daß der Schlitten (10) eine Längsbohrung (20) aufweist, in die die Spindelmutter (21) eingearbeitet ist und die auch den Kraftverstärker (36) umschließt.

5. Hochdruckspanner nach einem oder mehreren der vorhergehenden Ansprüche, dadurch gekennzeichnet, daß sich der Kraftverstärker (36) bei der Drehung der Schraubspindel (23) mit dieser mitdreht.

6. Hochdruckspanner nach einem oder mehreren der vorhergehenden Ansprüche, dadurch gekennzeichnet, daß zwischen der Schraubspindel (23) und dem Kraftverstärker (36) eine federbelastete Ausrückkupplung (29, 30) vorgesehen ist und beim Auskuppeln der Kraftverstärker unter der Wirkung der Kurbel die Schraubspindel (23) mit erhöhter Kraft voranschiebt.

## Claims

1. High pressure clamping device comprising a screw vice body (1), a fixed jaw (5) and a jaw (11) movable relative to the fixed jaw in a guide (13, 14) on the screw vice body (1), a thrust block (24) on the screw vice body for a tensioning drive mechanism of the movable jaw (11) which consists of a force intensifier (36) and a threaded spindle (23) which are operable by means of a common crank, said spindle engaging in a spindle nut (21) and said tensioning drive mechanism (23, 36) with the spindle nut (21) being arranged below the jaws (5, 11), characterised in that the fixed jaw (5) is arranged at the one end portion of the screw vice body (1) and the thrust block (24) at the other end portion of the screw vice body, which receives in its guide (13, 14) a slide (10) for the movable jaw (11), whereby the slide (10) is movable relative to the tensioning drive mechanism (23, 36) and the movable jaw is situated over the force intensifier (36) when the slide is in a retracted position, said force intensifier (36) being arranged in the screw vice body (1) between the thrust block (24) and the screw vice body (23), and that the spindle nut (21) is provided in a projection (9) of the slide (10) directed towards the fixed jaw (5) and projecting over the movable jaw (11).

2. High pressure clamping device in accordance with claim 1, characterised in that the slide (10) with its essential part is received in a longitudinal recess (12) of the screw vice body, and that in this recess the guide (13, 14, 15) of the slide is arranged in the screw vice body (1).

3. High pressure clamping device in accordance with one or both of the preceding claims, characterised in that the slide (10) only projects with the mounted movable jaw (11) up over the screw vice body (1).

4. High pressure clamping device in accordance with one or several of the preceding claims, characterised in that the slide (10) has a longitudinal bore (20) in which the spindle nut (21) is incorporated, said bore also enclosing the force intensifier (36).

5. High pressure clamping device in accordance with one or several of the preceding claims, characterised in that the force intensifier (36) turns with the rotation of the threaded spindle (23).

6. High pressure clamping device in accordance with one or several of the preceding claims, characterised in that there is provided between the threaded spindle (23) and the force intensifier (36) a spring-loaded disengagement coupling (29, 30) and during disengagement the force intensifier pushes forward the threaded spindle (23) with increased force under the influence of the crank.

## Revendications

1. Dispositif de serrage à haute pression comprenant un corps d'étau (1), une mâchoire fixe (5) et une mâchoire mobile (11) déplaçable dans un guidage (13, 14) du corps d'étau (1) par rapport à la mâchoire fixe, une butée (24) sur le corps d'étau pour un mécanisme de commande de la mâchoire mobile (11) composé d'un amplificateur de puissance (36) et d'une broche à vis (23) pouvant être entraînés au moyen d'une manivelle commune, la broche à vis coopérant avec un écrou de broche (21) et le mécanisme de commande de serrage (23, 36) avec l'écrou de broche (21) étant disposé au-dessous des mâchoires (5, 11), caractérisé en ce que la mâchoire fixe (5) est disposée à l'une des extrémités du corps d'étau (1) et la butée (24) à l'autre extrémité du corps d'étau lequel reçoit dans son guidage (13, 14) un chariot (10) pour la mâchoire mobile (11), le chariot (10) pouvant être déplacé par rapport au mécanisme de commande de serrage (23, 36) et la mâchoire mobile se trouvant, dans la position retirée du chariot (10), au-dessus de l'amplificateur de puissance (36) lequel est monté dans le corps d'étau (1), entre la butée (24) et la broche à vis (23), et que l'écrou de broche (21) est logé dans une rallonge (9) du chariot (10) dirigée vers la mâchoire fixe (5) et dépassant de la mâchoire mobile (11).

2. Dispositif de serrage à haute pression selon la revendication 1, caractérisé en ce que le chariot (10) est encastré en majeure partie dans un évidement allongé (12) du corps d'étau et que le guidage (13, 14, 15) du chariot sur le corps d'étau (1) est placé dans cet évidement.

3. Dispositif de serrage à haute pression selon l'une ou les deux revendications précédentes, caractérisé en ce que le chariot (10) ne dépasse du corps d'étau (1) vers le haut qu'avec la mâchoire mobile (11) montée.

4. Dispositif de serrage à haute pression selon l'une ou plusieurs des revendications précédentes, caractérisé en ce que le chariot (10) présente un alésage longitudinal (20) dans lequel est incorporé l'écrou de broche (21) et qui entoure également l'amplificateur de puissance (36).

5. Dispositif de serrage à haute pression selon l'une ou plusieurs des revendications précédentes, caractérisé en ce que, lors de la rotation de la broche à vis (23), l'amplificateur de puissance (36) tourne avec celle-ci.

6. Dispositif de serrage à haute pression selon l'une ou plusieurs des revendications précédentes, caractérisé en ce qu'un dispositif de débrayage (29, 30) commandé par ressort est prévu entre la broche à vis (23) et l'amplificateur de puissance (36), et que, lors du débrayage, l'amplificateur de puissance fait avancer la broche à vis (23) avec une force accrue, sous l'action de la manivelle.

FIG. 1

FIG. 2

# FIG. 3